# EUROPEAN PATENT SPECIFICATION

(11) **EP 1 201 704 B1**
(45) Date of publication and mention of the grant of the patent: **13.10.2004**
(21) Application number: 01124715.2
(22) Date of filing: 16.10.2001
(51) Int. Cl.: C08K 3/04, C08K 5/00, C08L 33/14

(54) **Rubber composition and heat-resistant hoses**
Kautschukzusammensetzung und hitzebeständige Schläuche
Composition caoutchouteuse et tuyaux thermo-résistants

(30) Priority: 19.10.2000 JP 2000318821
(43) Date of publication of application: 02.05.2002
(73) Proprietor: Tokai Rubber Industries, Ltd., Komaki-shi, Aichi-ken, 485-8550 (JP)
(72) Inventor: Yamamoto, Yasuo, Komaki-shi, Aichi-ken, 485-0831 (JP); Noda, Masashi, Kounan-shi, Aichi-ken, 483-8236 (JP); Ikeda, Hidehito, Kasugai-shi, Aichi-ken, 486-0968 (JP); Kanbe, Shinobu, Komaki-shi, Aichi-ken, 485-0029 (JP)
(74) Representative: KUHNEN & WACKER

(56) References cited:
- US-A- 4 511 698
- US-A- 4 931 509

## Description

### BACKGROUND OF THE INVENTION

### 1. Field of the Invention:

This invention relates to a rubber composition and a heat-resistant hose. More particularly, it relates to an acrylic rubber composition having an epoxy group in which the total content of necessary or useful additives and a Mooney viscosity are within specified ranges. The acrylic rubber composition can be extruded into a hose of a large diameter having high heat resistance and high compression set resistance. This invention also relates to a heat-resistant hose formed of such a composition.

### 2. Description of the Related Art:

A rubber composition mainly composed of acrylic rubber as a base material has often been used as a material for hoses required to have heat and oil resistances . Examples of those hoses are oil and air system hoses for motor vehicles. The use of acrylic rubber having an epoxy group has been proposed to obtain an acrylic rubber composition improved in heat resistance, compression set resistance, etc. Various proposals have also been made for the monomeric compositions of acrylic rubber having an epoxy group and for the additives such as a vulcanizing agent.

The invention disclosed in Japanese Patent Application Laid-Open No. 176293/1997, for example, proposes the addition of an imidazole compound, trimethyl thiourea and a quaternary ammonium salt to an elastomer having an epoxy group. Its object is to provide an acrylic elastomer composition having a high rate of vulcanization and a low compression set.

The invention disclosed in Japanese Patent Application Laid-Open No. 227749/1997 proposes an acrylic elastomer composition having an epoxy group and containing carbon black having an average particle diameter of 20 to 30 nm and a DBP (dibutyl phthalate) absorption of at least 115 ml/100 g. The composition also contains an imidazole compound, trimethyl thiourea and a quaternary ammonium salt.

The invention disclosed in Japanese Patent Application Laid-Open No. 322853/1999 proposes acrylic rubber having the monomeric composition stated below. Its monomeric composition consists of 0.1 to 2.9% by weight of an ethylene monomer, 0 to 10% by weight of a cure site monomer, and 87.1 to 99.9% by weight of an ethyl acrylate and/or n-butyl acrylate monomer.

An acrylic rubber composition having an epoxy group is required to satisfy three conditions as stated below in order to be suitable for use in making, for example, an air hose for a supercharger in a turbocharger assembly vehicle. The inventors of this invention have found that none of the known acrylic rubber compositions cited above can satisfy all of the three conditions:
(1) high heat resistance;
(2) low compression set at a high temperature; and
(3) easy extrudability into a hose having a diameter as large as 35 to 80 mm.

It is necessary or beneficial to add an imidazole compound, trimethyl thiourea and a quaternary ammonium salt as a vulcanizing agent for acrylic rubber. It is also necessary or beneficial to add carbon black having an average particle diameter of 20 to 30 nm and a DBP absorption of at least 115 ml/100 g. The selection of the monomeric composition as cited above is itself necessary or beneficial.

The selection of the vulcanizing agent as stated above may give a rubber composition improved in (1) and (2), but its extrusion into a hose with a large diameter may result in a flattened hose. Its satisfactory extrusion is difficult. The difficulty is apparently due to too low a Mooney viscosity of the composition as is obvious from the description of examples in Japanese Patent Application Laid-Open No. 322853/1999.

The addition of an appropriate amount of a specific kind of carbon black to acrylic rubber with the vulcanizing agent as mentioned above is useful for restraining the flattening of an extruded hose to some extent. The hose is, however, unsatisfactory in its surface skin quality and heat resistance. The addition of an excess of carbon black for obtaining an improved surface skin causes the hardening of a vulcanized rubber composition resulting in a hose which is low in compression set and heat resistances.

### SUMMARY OF THE INVENTION

It is, therefore, an object of this invention to provide an acrylic rubber composition having an epoxy group which satisfies all of the three requirements as stated at (1) to (3) above. It is another object of this invention to provide a heat-resistant hose formed of the acrylic rubber composition and having improved quality. The inventors have found that in order to attain these objects, it is important to increase a Mooney viscosity of uncured rubber without allowing a vulcanized product thereof to harden.

According to a first aspect of this invention, there is provided a rubber composition comprising acrylic rubber having an epoxy group as a base material, and 50 to 80 parts by weight of carbon black having an average particle diameter of 30 to 60 nm and a dibutyl phthalate (DBP) absorption of at least 150 cc/100 g, and 0.8 to 2.6 parts by weight of a vulcanizing agent, each relative to 100 parts by weight of the base material, wherein the rubber composition contains a total of 160 to 220 parts by weight of additives including the carbon black and the vulcanizing agent relative to 100 parts by weight of the base material, and has a Mooney viscosity of 30 to 70 ML₁₊₃ (121°C).

The acrylic rubber composition having a Mooney viscosity of 30 to 70 ML₁₊₃(121°C) can be extruded satisfactorily into a hose having a diameter as large as 35 to 80 mm without causing any flattening. The addition of carbon black in the proportion as stated improves the tensile strength and heat resistance of the composition as intended and prevents any flattening of an extruded hose. It does not substantially affect the Mooney viscosity of the composition. The addition of the vulcanizing agent in the proportion as stated improves the heat and compression set resistances of the composition as intended without affecting its Mooney viscosity substantially.

The addition of the carbon black and vulcanizing agent as stated is, however, not sufficient for realizing the Mooney viscosity of the acrylic rubber composition as stated. Therefore, the composition further contains other additives to the extent that all the additives including carbon black and the vulcanizing agent make a total of 160 to 220 parts by weight. Thus, there is a high degree of freedom in selecting kinds and amounts of additives to provide a desired Mooney viscosity. In addition to carbon black and a vulcanizing agent, additives such as an antioxidant, a plasticizer and a processing aid may be included in appropriate amounts.

The rubber composition according to the first aspect of this invention has a high heat resistance and a low compression set at a high temperature and can be extruded satisfactorily into a hose having a large diameter. Carbon black having an average particle diameter of 30 to 60 nm is more useful for heat and compression set resistances than carbon black having an average particle diameter of less than 30 nm, or about 20 nm. Carbon black having a DBP absorption of at least 150 cc/100 g is more useful for flattening resistance and surface skin quality than carbon black having a DBP absorption of, say, 115 to 145 cc/100 g.

According to a second aspect of this invention, the vulcanizing agent comprises an imidazole compound, a thiourea compound and a quaternary ammonium salt. This combination of compounds is preferred as the vulcanizing agent for an acrylic rubber composition having an epoxy group in order to ensure its heat and compression set resistances.

According to a third aspect of this invention, the vulcanizing agent comprises 0.5 to 1.5 parts by weight of an imidazole compound, 0.2 to 0.7 part by weight of a thiourea compound and 0.1 to 0.4 part by weight of a quaternary ammonium salt. These proportions are preferred for the heat and compression set resistances of the composition and its pot life or storage stability.

According to a fourth aspect of this invention, the imidazole compound has the chemical formula: 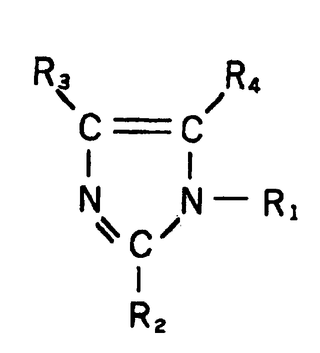 where R₁ is a methyl or ethyl group, R₂ is a hydrogen atom, or an alkyl, substituted alkyl, aryl or substituted aryl group having one to 17 carbon atoms, and R₃ and R₄ are each a hydrogen atom, or an alkyl or substituted alkyl group having one to 17 carbon atoms, or a cyano, hydroxyalkyl, carboxyl, thiocarbamoyl or imidazolyl group. As for the imidazole compound, the use of one having the above chemical formula is preferred. R₁ is preferably a methyl or ethyl group to ensure the heat and compression set resistances and storage stability of the composition.

According to a fifth aspect of this invention, the acrylic rubber of one of the first to fourth aspects comprises at least 70% by weight of ethyl acrylate and at most 10% by weight of methoxyethyl acrylate as a monomer. It is superior in heat and compression set resistances to the rubber having the monomeric composition shown in Japanese Patent Application Laid-Open No. 322853/1999.

According to a sixth aspect of this invention, there is provided a heat-resistant hose made by extrusion from the rubber composition according to any of the first to fifth aspects of this invention, and having an inside diameter of 35 to 80 mm. The hose has a high heat resistance and a low compression set at a high temperature. Uncured rubber can be extruded satisfactorily without flattening despite its diameter as large as 35 to 80 mm.

According to a seventh aspect of this invention, the hose is an air or oil system hose of a high heat resistance for a motor vehicle. The hose according to this aspect of the invention is preferred as an air or oil system hose for a motor vehicle, and particularly as an air system hose for a supercharger.

The above and other features and advantages of this invention will become more apparent from the following description.

### DETAILED DESCRIPTION OF THE INVENTION

### (Rubber Composition)

The rubber composition according to this invention comprises acrylic rubber having an epoxy group as a base material, and 50 to 80 parts by weight of carbon black and 0.8 to 2.6 parts by weight of a vulcanizing agent, each relative to 100 parts by weight of the base material. The composition also comprises a total of 160 to 220 parts by weight of additives icluding the carbon black and the vulcanizing agent relative to 100 parts by weight of the base material. The composition has a Mooney viscosity of 30 to 70 ML₁₊₃ (121°C) as determined in accordance with the JIS K-6300 method.

### (Acrylic Rubber)

The acrylic rubber used as the base material has an epoxy group as a cure site. It is obtained by copolymerizing a cure site monomer having an epoxy group and at least one kind of copolymerizable monomer by a known method such as emulsion, suspension, solution or bulk polymerization. Its monomeric composition preferably comprises at least 70% by weight of ethyl acrylate and at most 10% by weight of methoxyethyl acrylate.

Examples of the cure site monomers include glycidyl acrylate, glycidyl methacrylate, allylglycidyl ether and metaallylglycidyl ether. The cure site monomers are preferably so employed as to give acrylic rubber having an epoxy group content of 0.7 to 2.3% by weight.

Examples of the monomers copolymerizable with the cure site monomers include known alkyl ester acrylates, such as methyl, ethyl, n-propyl, n-butyl and isobutyl acrylates. Other examples include known alkoxyalkyl ester acrylates, such as 2-methoxyethyl, 2-(n-propoxy)ethyl, 2-(n-butoxy)ethyl and 3-methoxypropyl acrylates.

The monomeric composition of the acrylic rubber preferably includes not less than 60% by weight of ethyl acrylate so that there may not be any undesirable deterioration of reinforcing yarn.

Examples of other monomers copolymerizable with the cure site monomers are known fluoro ester acrylates, such as 1,1-dihydroperfluoroethyl, 1,1-dihydroperfluoropropyl and 1,1,5-trihydroperfluorohexyl (meth)acrylates. Other examples are known hydroxy ester acrylates, such as 1-hydroxypropyl, 2-hydroxypropyl and hydroxyethyl (meth)acrylates. Other examples are known tertiary amino acrylates, such as diethylaminoethyl and dibutylaminoethyl (meth)acrylates. Still other examples are known methacrylates, such as methyl and octyl methacrylates. Further examples are known alkyl vinyl ketones, vinyl ethers, allyl ethers, aromatic vinyl compounds, vinylnitrile, ethylene, propylene, vinyl chloride, vinylidene chloride, vinyl fluoride, vinylidene fluoride, vinyl acetate, vinyl propionate and alkyl fumarates.

Specific examples of commercially available acrylic rubbers are NOXTITE of Nippon Mektron, Ltd., Nipol AR of Nippon Zeon Co., Ltd., TOA ACRON of Tohpe Corporation, DENKA ER of Denki Kagaku Kogyo K.K. and ESPRENE EMA of Sumitomo Chemical Co., Ltd.

### (Carbon Black)

The carbon black added to the acrylic rubber has an average particle diameter of 30 to 60 nm and a DBP absorption of at least 150 cc/100 g. It preferably has an average particle diameter of 35 to 50 nm. The average particle diameter of carbon black means its length-mean particle diameter as determined by electron microscopic analysis, and its DBP absorption is the value as determined in accordance with the JIS K-6221 A method (mechanical method).

Specific examples of preferred commercially available carbon blacks are SEAST 116HM and SEAST FM of Tokai Carbon Co., Ltd. and Asahi F-200 of Asahi Carbon Co., Ltd. Either a single product, or a mixture of two or more may be used to achieve the desired properties.

### (Vulcanizing Agent)

The vulcanizing agent is employed in the proportion of 0.8 to 2.6 parts, or preferably 1.25 to 2.15 parts by weight relative to 100 parts by weight of acrylic rubber having an epoxy group. There is no specific limitation to any vulcanizing agent, or any combination of two or more agents to be employed.

The vulcanizing agent, however, preferably comprises an imidazole compound, a thiourea compound and a quaternary ammonium salt. It more preferably comprises 0.5 to 1.5 parts, or still more preferably 0.75 to 1.25 parts by weight of an imidazole compound, 0.2 to 0.7 part, or still more preferably 0.3 to 0.6 part by weight of a thiourea compound, and 0.1 to 0.4 part, or still more preferably 0.2 to 0.3 part by weight of a quaternary ammonium salt, making a total of 0.8 to 2.6 parts by weight.

The imidazole compound is preferably of the formula shown before, where R₁ is a methyl or ethyl group. It is possible to use any of the compounds obtained by substituting an atom or a group of atoms for each of the substituents on the imidazole skeleton. Examples include 1-methylimidazole, 1,2-dimethylimidazole, 1-benzyl-2-ethylimidazole, 1-benzyl-2-phenylimidazole · trimellitic acid salt, 1-aminoethyl-2-methylimidazole, 1-cyanoethyl-2-ethyl-4-methylimidazole and a trimellitate thereof, 2,4-diamino-6-[2'-methylimidazolyl-(1)']ethyl-s-triazine and isocyanuric acid additament, N,N'-bis(2-methylimidazolyl-1-ethyl)urea, N,N'-[2-methylimidazolyl-(1)-ethyl]adipoyldiamide and 1-dodecyl-2-methyl-3-benzylimidazolium chloride.

There is no specific limitation as to the thiourea compound to be employed. Examples include trimethyl thiourea, ethylene thiourea, N,N'-diphenyl thiourea, diorthotolyl thiourea, diethyl thiourea, dibutyl thiourea and dilauryl thiourea. Trimethyl thiourea is, among others, preferred for its effectiveness in improving the compression set resistance of acrylic rubber.

There is no specific limitation as to the quaternary ammonium salt, either. Examples are tetraethylammonium bromide, tetrabutylammonium chloride, cetyltrimethylammonium bromide, n-dodecyltrimethylammonium bromide, cetyl pyridium chloride, 1,8-diaza-bicyclo(5,4,0)undecene-7-benzylammonium chloride and cetyl pyridium iodide.

### (Other Additives)

The rubber composition contains a total of 160 to 220 parts by weight of additives including the carbon black and vulcanizing agent relative to 100 parts by weight of acrylic rubber having an epoxy group as a base material. It is possible to employ any suitable additives other than the carbon black and vulcanizing agent in any suitable proportions if the total falls within the range as stated. Examples of the other additives are a vulcanization accelerator, a white reinforcing agent and an antioxidant, which are all known in the art.

### (Heat-Resistant Hose)

The heat-resistant hose according to this invention is made by extrusion from any acrylic rubber composition according to this invention, and has an inside diameter of 35 to 80 mm. Its use is not specifically limited, though it may preferably be used as a heat-resistant air or oil system hose for a motor vehicle.

The hose may be formed only of a layer of the acrylic rubber having an epoxy group. It may alternatively be formed of a multilayer further including an inner, middle and/or outer layer of any other kind of synthetic rubber. Examples of the other synthetic rubbers include fluororubber, fluoroacrylic rubber, hydrin rubber, CSM, CR, NBR and ethylene-propylene rubber. The multilayer wall may also include a middle or outermost layer of reinforcing yarn or wire.

### DESCRIPTION OF PREFERRED EMBODIMENTS

### Preparation of Uncured Acrylic Rubber Compositions

Acrylic rubber compositions according to Examples 1 to 8 embodying this invention and Comparative Examples 1 to 13 were prepared as shown in Tables 1 to 3.

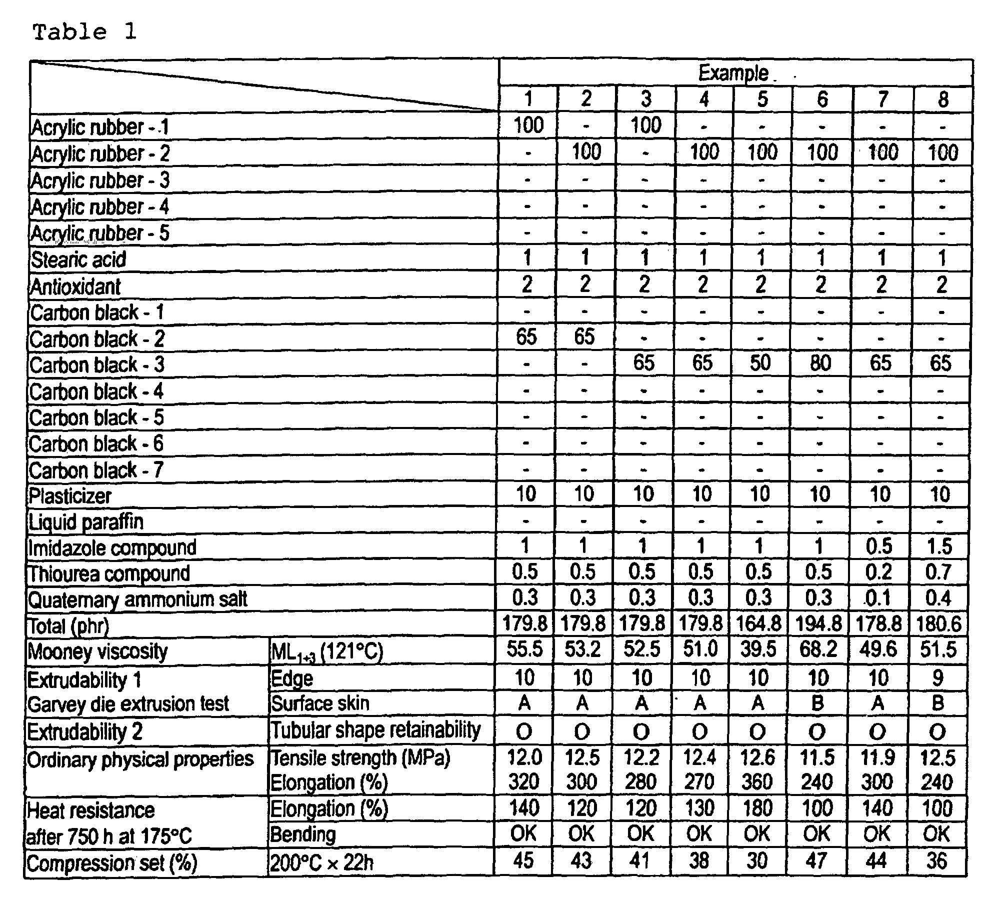

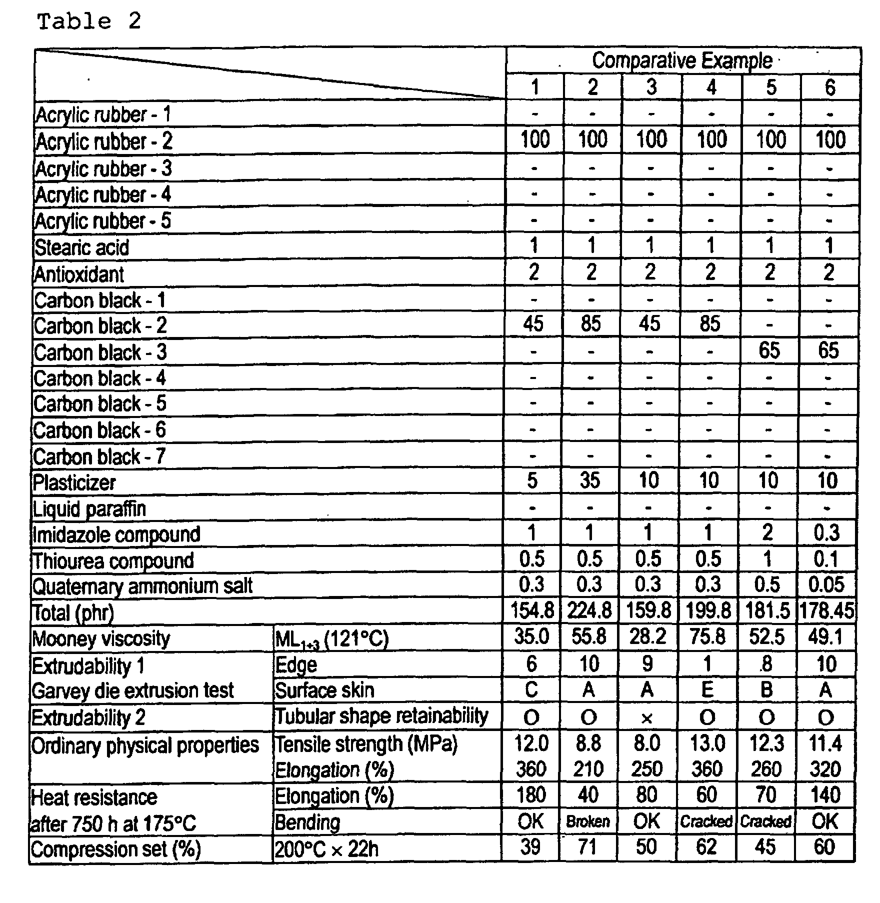

**Table 3**

| | | Comparative Example | | | | | | |
|---|---|---|---|---|---|---|---|---|
| | | 7 | 8 | 9 | 10 | 11 | 12 | 13 |
| Acrylic rubber *-* 1 | | - | - | - | - | - | - | - |
| Acrylic rubber - 2 | | 100 | 100 | 100 | 100 | - | - | - |
| Acrylic rubber - 3 | | - | - | - | - | 100 | - | - |
| Acrylic rubber - 4 | | - | - | - | - | - | 100 | - |
| Acrylic rubber - 5 | | - | - | - | - | - | - | 100 |
| Stearic acid | | 1 | 1 | 1 | 1 | 1 | 1 | 1 |
| Antioxidant | | 2 | 2 | 2 | 2 | 1 | 1 | 1 |
| Carbon black 1 1 | | 65 | - | - | - | 60 | - | 50 |
| Carbon black - 2 | | - | - | - | - | - | - | - |
| Carbon black - 3 | | - | - | - | - | - | - | - |
| Carbon black - 4 4 | | - | 65 | - | - | - | - | - |
| Carbon black - 5 | | - | - | 65 | - | - | - | - |
| Carbon black - 6 | | - | - | - | 65 | - | - | - |
| Carbon black - 7 | | - | - | - | - | - | 65 | - |
| Plasticizer | | 10 | 10 | 10 | 10 | - | - | - |
| Liquid paraffin | | - | - | - | - | 2 | 2 | 1 |
| Imidazole compound | | 1 | 1 | 1 | 1 | 1 | 0.5 | 2 |
| Thiourea compound | | 0.5 | 0.5 | 0.5 | 0.5 | 1 | 2 | 1 |
| Quaternary ammonium salt | | 0.3 | 0.3 | 0.3 | 0.3 | 0.5 | 0.5 | 0.5 |
| Total (phr) | | 179.8 | 179.8 | 179.8 | 179.8 | 166.5 | 172 | 156.5 |
| Mooney viscosity | ML₁₊₃ (121°C) | 44.0 | 55.4 | 25.5 | 29.5 | 43.9 | 55.2 | 43.3 |
| Extrudability 1 Garvey die extrusion test | Edge | 8 | 5 | 8 | 9 | 8 | 5 | 8 |
| | Surface skin | B | C | B | A | B | C | C |
| Extrudability 2 | Tubular shape retainability | Δ | O | × | × | Δ | O | Δ |
| Ordinary physical properties | Tensile strength (MPa) Elongation (%) | 10.1 220 | 11.3 330 | 7.4 150 | 10.1 230 | 10.1 360 | 11.9 320 | 11.3 330 |
| Heat resistance after 750 h at 175°C | Elongation (%) | 100 | 50 | 70 | 90 | 40 | 40 | 70 |
| | Bending | OK | Broken | Cracked | OK | Broken | Broken | Cracked |
| Compression set (%) | 200°C × 22h | 44 | 63 | 45 | 42 | 65 | 65 | 45 |

Each of acrylic rubbers 1 to 5 having the monomeric composition (% by weight) shown in Table 4 was used as the base material of the acrylic rubber composition.

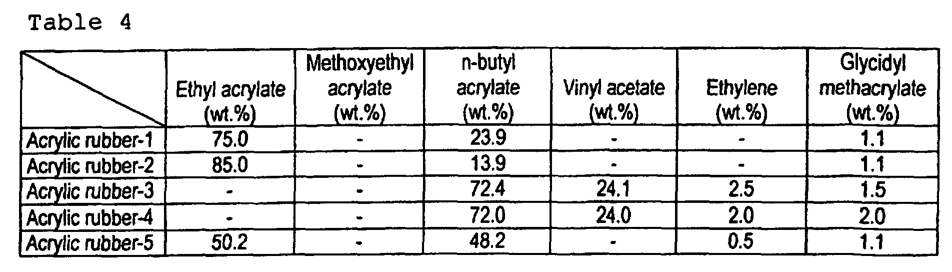

In each Example or Comparative Example, those amounts of the additives excluding the vulcanizing agents which are shown by parts by weight relative to 100 parts by weight of the base material in Table 1, 2 or 3 were mixed with the base material in a Banbury mixer having a capacity of 1.5 liters. Then, the vulcanizing agents, i.e. the imidazole compound, thiourea compound, and quaternary ammonium salt, were mixed with the mixture containing the base material in an 8-inch roll mill.

Table 5 shows the average particle diameter (nm) and DBP absorption (cc/100 g) of each of carbon blacks 1 to 7 shown in Tables 1 to 3. Table 6 shows the tradenames of the vulcanizing agents, carbon blacks and other additives shown in Tables 1 to 3.

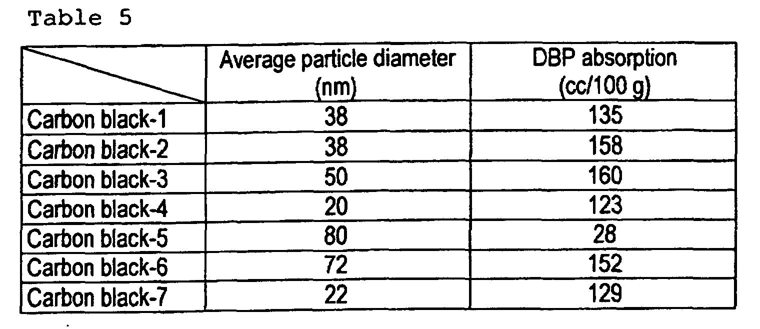

**Table 6**

| (Tradenames) |
|---|
| • Stearic acid: Lunac S30 (Kao Corp.) |
| • Antioxidant: Naugard 445 (Uniroyal Chemical) |
| • Carbon black - 1: SEAST 116 (Tokai Carbon) |
| • Carbon black - 2: SEAST 116HM (Tokai Carbon) |
| • Carbon black - 3: SEAST FM (Tokai Carbon) |
| • Carbon black - 4: SEAST 6 (Tokai Carbon) |
| • Carbon black - 5: Asahi Thermal (Asahi Carbon) |
| • Carbon black - 6: SEAST FY (Tokai Carbon) |
| • Carbon black - 7: SEAST 5H (Tokai Carbon) |
| • Plasticizer: ADEKA RS-735 (Asahi Denka Kogyo) |
| • Imidazole compound: SN-25 (Shikoku Corp.) (Chemical name: 1,2-dimethylimidazole) |
| • Thiourea compound: NOCCELER TMU (Ouchi Shinko Chemical) (Trimethyl thiourea) |
| • Quaternary ammonium salt: Katinal STB (Toho Chemical) (Octadecyltrimethylammonium bromide) |

### Evaluation of Uncured Acrylic Rubber Composition

### Mooney Viscosity:

The Mooney viscosity (ML₁₊₃, 121°C) of the acrylic rubber composition according to each Example or Comparative Example was determined in accordance with the JIS K-6300 method. It was determined by using an L type rotor, preheating the composition at a temperature of 121°C for a minute, rotating the rotor and reading the meter after three minutes. The results are shown in Tables 1 to 3.

### Extrudability 1 - Garvey Die Extrusion Test:

A Garvey die extrusion test conforming to ASTM D2230 was conducted on the acrylic rubber composition according to each Example or Comparative Example. It was conducted after 72 hours of heat aging at a temperature of 40°C. The results are shown for the edge and surface skin of the extruded product in Tables 1 to 3. The edge means the appearance of the edge of the product (i.e. its sharpness and continuity) and its evaluation is shown by one of ten figures from 1 (Inferior) to 10 (Superior). The surface skin means its smoothness and its evaluation is shown by one of five letters A (Superior) to E (Inferior).

### Extrudability 2:

The acrylic rubber composition according to each Example or Comparative Example was extruded into a tubular sample by employing a die diameter of 50 mm, a spindle diameter of 45 mm and a screw rotating speed of 40 rpm. The sample was left to stand at a temperature of 40°C for 24 hours and its shape was thereafter examined visually. The result is shown in Table 1, 2 or 3 (at Extrudability 2) by a circle if the sample retained at least 75% of its original diameter, by a triangle if it retained at least 50% and less than 75% of its original diameter, or by an x if it retained only less than 50% of its original diameter.

### Ordinary Physical Properties:

A rubber sheet having a thickness of 2 mm was formed from the acrylic rubber composition according to each Example or Comparative Example by a 6-inch roll mill. It was subjected to 60 minutes of press vulcanization at a temperature of 160°C, and then to eight hours of oven vulcanization at 150°C to prepare a test specimen for evaluation. The specimen was tested for its tensile strength (MPa) and elongation (%) in accordance with the JIS K-6251 methods. The results are shown in Table 1, 2 or 3 (at Ordinary Physical Properties).

### Heat Resistance:

A specimen in the form of a sheet was likewise prepared from each acrylic rubber composition for a heat resistance test. It was tested for its elongation (%) after 750 hours of heat aging at a temperature of 175°C in accordance with the JIS K-6257 method. A JIS 5 dumbbell specimen was prepared from the sheet as heat aged, was bent by an angle of 180 degrees, and was visually inspected for anything abnormal, such as cracking or breaking. The results are shown in Table 1, 2 or 3 by the expression OK if nothing abnormal was found, or by another specific expression for something abnormal.

### Compression Set:

A large test specimen conforming to JIS K-6262 was prepared from each acrylic rubber composition by 60 hours of press vulcanization at 160°C and eight hours of oven vulcanization at 150°C. It was examined for its compression set (%) after 22 hours of heat aging at 200°C in accordance with the JIS K-6262 method. The result is shown in Table 1, 2 or 3 (at Compression Set).

While the invention has been described by its preferred embodiments, it is to be understood that variations or modifications may be easily made by those skilled in the art without departing from the scope of this invention which is defined by the appended claims.

## Claims

1. A rubber composition comprising
acrylic rubber having an epoxy group as a base material, and
50 to 80 parts by weight of carbon black having an average particle diameter of 30 to 60 nm and a dibutyl phthalate (DBP) absorption of at least 150 cc/100 g, and 0.8 to 2.6 parts by weight of a vulcanizing agent, each relative to 100 parts by weight of the base material,
wherein the rubber composition contains a total of 160 to 220 parts by weight of additives including the carbon black and the vulcanizing agent relative to 100 parts by weight of the base material, and has a Mooney viscosity of 30 to 70 ML₁₊₃ (121°C).

2. The composition according to claim 1, wherein the content of the vulcanizing agent is 1.25 to 2.15 parts by weight.

3. The composition according to claim 1, wherein the vulcanizing agent comprises an imidazole compound, a thiourea compound and a quaternary ammonium salt.

4. The composition according to claim 3, wherein the vulcanizing agent comprises 0.5 to 1.5 parts by weight of the imidazole compound, 0.2 to 0.7 part by weight of the thiourea compound and 0.1 to 0.4 part by weight of the quaternary ammonium salt, each relative to 100 parts by weight of the base material.

5. The composition according to claim 3, wherein the vulcanizing agent comprises 0.75 to 1.25 parts by weight of the imidazole compound, 0.3 to 0.6 part by weight of the thiourea compound and 0.2 to 0.3 part by weight of the quaternary ammonium salt, each relative to 100 parts by weight of the base material.

6. The composition according to claim 3, wherein the imidazole compound has the following formula: 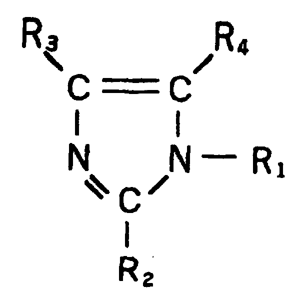 where R₁ is a methyl or ethyl group, R₂ is a hydrogen atom, or an alkyl, substituted alkyl, aryl or substituted aryl group having one to 17 carbon atoms, and R₃ and R₄ are each a hydrogen atom, or an alkyl or substituted alkyl group having one to 17 carbon atoms, or a cyano, hydroxyalkyl, carboxyl, thiocarbamoyl or imidazolyl group.

7. The composition according to claim 1, wherein the acrylic rubber having an epoxy group comprises at least 70% by weight of ethyl acrylate and at most 10% by weight of methoxyethyl acrylate as a monomer.

8. A heat-resistant hose made by extrusion from the composition according to claim 1, and having an inside diameter of 35 to 80 mm.

9. The hose according to claim 8, wherein the hose is an air or oil system hose of a high heat resistance for a motor vehicle.

10. The hose according to claim 8, wherein the hose is formed of a single layer of the acrylic rubber composition, or a multilayer including a layer of the acrylic rubber composition and an inner, middle and/or outer layer of a different kind of synthetic rubber.

## Patentansprüche

1. Kautschuk-Zusammensetzung, umfassend
Acrylkautschuk mit einer Epoxygruppe als Grundmaterial und
50 bis 80 Gew.-% Kohleschwarz mit einem durchschnittlichen Teilchendurchmesser von 30 bis 60 nm und einer Dibutylphthalat- (DBP-) Absorption von mindestens 150 cm³/100 g und 0,8 bis 2,6 Gewichtsteilen eines Vulkanisierungsmittels, jeweils bezogen auf 100 Gewichtsteile des Grundmaterials,
worin die Kautschukzusammensetzung insgesamt 160 bis 220 Gewichtsteile an Additiven einschließlich des Kohleschwarz und des Vulkanisierungsmittels, bezogen auf 100 Gewichtsteile des Grundmaterials, enthält und eine Mooney-Viskosität von 30 bis 70 ML₁₊₃ (121°C) aufweist.

2. Zusammensetzung nach Anspruch 1, worin der Gehalt an Vulkanisierungsmittel 1,25 bis 2,15 Gewichtsteile beträgt.

3. Zusammensetzung nach Anspruch 1, worin das Vulkanisierungsmittel eine Imidazolverbindung, eine Thioharnstoffverbindung und ein quartäres Ammoniumsalz umfaßt.

4. Zusammensetzung nach Anspruch 3, worin das Vulkanisierungsmittel 0,5 bis 1,5 Gewichtsteile Imidazolverbindung, 0,2 bis 0,7 Gewichtsteile Thiohamstoffverbindung und 0,1 bis 0,4 Gewichtsteile quartäres Ammoniumsalz umfaßt, jeweils bezogen auf 100 Gewichtsteile Grundmaterial.

5. Zusammensetzung nach Anspruch 3, worin das Vulkanisierungsmittel 0,75 bis 1,25 Gewichtsteile Imidazolverbindung, 0,3 bis 0,6 Gewichtsteile Thioharnstoffverbindung und 0,2 bis 0,3 Gewichtsteile quartäres Ammoniumsalz umfaßt, jeweils bezogen auf 100 Gewichtsteile Grundmaterial.

6. Zusammensetzung nach Anspruch 3, worin die Imidazolverbindung die folgende Formel aufweist 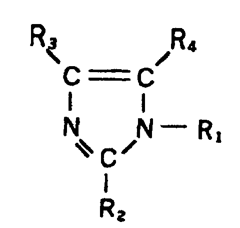 worin R₁ eine Methyl- oder Ethylgruppe ist, R₂ ein Wasserstoffatom oder eine Alkyl-, eine substituierte Alkyl-, eine Aryl- oder eine substituierte Arylgruppe mit einem bis 17 Kohlenstoffatomen ist, und R₃ und R₄ jeweils ein Wasserstoffatom oder eine Alkyl- oder eine substituierte Alkylgruppe mit einem bis 7 Kohlenstoffatomen oder eine Cyano-, Hydroxyalkyl- Carboxyl- Thiocarbamoyl- oder Imidazolylgruppe sind.

7. Zusammensetzung nach Anspruch 1, worin der Acrylkautschuk mit einer Epoxygruppe mindestens 70 Gew.-% Ethylacrylat und höchstens 10 Gew.-% Methoxyethylacrylat als Monomer enthält.

8. Wärmebeständiger Schlauch, hergestellt durch Extrudieren aus einer Zusammensetzung nach Anspruch 1, mit einem Innendurchmesser von 35 bis 80 mm.

9. Schlauch nach Anspruch 8, worin es sich bei dem Schlauch um einen hoch wärmebständigen Schlauch eines Luft- oder Ölsystems für ein Motorfahrzeug handelt.

10. Schlauch nach Anspruch 8, worin der Schlauch aus einer einzigen Schicht aus der Acrylkautschuk-Zusammensetzung gebildet ist oder aus mehreren Schichten einschließlich einer Schicht aus der Acrylkautschuk-Zusammensetzung und einer Innen-, Mittel- und/oder Außenschicht aus einer anderen Art von synthetischem Kautschuk.

## Revendications

1. Composition caoutchouteuse comprenant :
un caoutchouc acrylique ayant un groupe époxy comme matériau de base, et
de 50 à 80 parties en poids de noir de carbone ayant un diamètre de particule moyen de 30 à 60 nm et une absorption de phtalate de dibutyle (DHP) d'au moins 150 cm³/100 g, et de 0,8 à 2,6 parties en poids d'un agent de vulcanisation, chacun par rapport à 100 parties en poids du matériau de base,
dans laquelle la composition de caoutchouc. contient un total de 160 à 220 parties en poids d'additifs comprenant le noir de carbone et l'agent de vulcanisation par rapport à 100 parties en poids du matériau de base, et a une consistance Mooney de 30 à 70 ML₁₊₃ (121°C).

2. Composition selon la revendication 1, dans laquelle le contenu de l'agent de vulcanisation est de 1,25 à 2,15 parties en poids.

3. Composition selon la revendication 1, dans laquelle l'agent de vulcanisation comprend un composé imidazole, un composé thiourée et un sel d'ammonium quaternaire.

4. Composition selon la revendication 3, dans laquelle l'agent de vulcanisation comprend de 0,5 à 1,5 parties en poids du composé imidazole, de 0,2 à 0,7 parties en poids du composé thiourée et de 0,1 à 0,4 parties en poids du sel d'ammonium quaternaire, chacun par rapport à 100 parties en poids du matériau de base.

5. Composition selon la revendication 3, dans laquelle l'agent de vulcanisation comprend de 0,75 à 1,25 parties en poids du composé imidazole, de 0,3 à 0,6 parties en poids du composé thiourée et de 0,2 à 0,3 parties en poids du sel d'ammonium quaternaire, chacun par rapport à 100 parties en poids du matériau de base.

6. Composé selon la revendication 3, dans lequel le composé imidazole a la formule suivante : 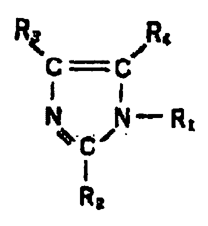 où R₁ est un groupe méthyle ou éthyle, R₂ est un atome d'hydrogène, ou un groupe alkyle, alkyle substitué, aryle ou aryle substitué ayant un à 17 atomes de carbone, et R₃ et R₄ sont chacun un atome d'hydrogène, ou un groupe alkyle ou alkyle substitué ayant un à 17 atomes de carbone, ou un groupe cyano, hydroxyalkyle, carboxyle, thiocarbamoyle, ou imidazolyle.

7. Composition selon la revendication 1, dans laquelle le caoutchouc acrylique ayant un groupe époxy comprend au moins 70 % en poids d'acrylate d'éthyle et au plus 10 % en poids d'acrylate de méthoxyéthyle comme monomère.

8. Tuyau flexible thermo-résistant fait par extrusion à partir de la composition selon la revendication 1, et ayant un diamètre intérieur de 35 à 80 mm.

9. Tuyau flexible selon la revendication 8, dans lequel le tuyau flexible est un tuyau flexible de système d'air ou d'huile de résistance à la chaleur élevée pour un véhicule à moteur.

10. Tuyau flexible selon la revendication 8, dans lequel le tuyau flexible est formé d'une couche unique de la composition de caoutchouc acrylique ou d'une multicouche comprenant une couche de la composition de caoutchouc acrylique et une couche interne, centrale et/ou externe d'un type différent de caoutchouc synthétique.
